# FASCICULE DE BREVET EUROPEEN

(11) **EP 0 349 433 B1**
(45) Date de publication et mention de la délivrance du brevet: **25.08.1993**
(21) Numéro de dépôt: 89401866.2
(22) Date de dépôt: 29.06.1989
(51) Int. Cl.: B65G 1/137, G06F 15/24

(54) **Procédé de gestion de magasins, dispositif pour sa mise en oeuvre**
Verfahren und Einrichtung zum Steuern von Lagern
Method and device for controlling stores

(30) Priorité: 01.07.1988 FR 8808970
(43) Date de publication de la demande: 03.01.1990
(73) Titulaire: SOCIETE GENERALE POUR LES TECHNIQUES NOUVELLES S.G.N. Société anonyme dite:, 78184 Saint-Quentin-en-Yvelines Cédex (FR)
(72) Inventeur: Berthier, Gérard, F-33200 Bordeaux (FR); Denis, Jacques, F-78800 Houilles (FR)
(74) Mandataire: Le Roux, Martine

(56) Documents cités:
- EP-A- 0 156 953
- EP-A- 0 198 402
- US-A- 3 463 566
- Patent Abstracts of Japan, vol. 10, no. 11, (M-501)(2267), 24 Juillet 1986
- Mini-MicroSystems, vol. 16, no. 10, septembre 1983, p.141-148, Denver, Colorado, USA; S. GLAZER: "Automated material-handling systems streamline management of goods"

## Description

La présente invention a pour objet un procédé de gestion de magasins, au sein desquels le rangement des objets ne s'effectue pas suivant un classement indexé. Un tel rangement peut être qualifié de rangement dans le désordre.

L'invention a également pour objet un dispositif pour la mise en oeuvre dudit procédé.

On a déjà décrit des rangements dans le désordre, notamment dans les demandes EP-A-0 198 402 et JP-A-61 051 401 et la publication MINI MICRO SYSTEMS vol. 16 (1983) Sept., No 10, Denver, Colorado, USA.

Des rangements de ce type vont à l'encontre du principe généralement établi qu'il convient d'attribuer à chaque chose une place. En effet, on affecte généralement à un objet une place et l'on range toujours ledit objet ou celui qui le remplace à la même place. Ainsi, on effectue le rangement d'objets sortis temporairement d'un magasin, en respectant une bijection entre lesdits objets et leur place dans le magasin. Des magasins, ainsi gérés, sont toujours dans le même ordre.

Par contre, les magasins gérés suivant le procédé de l'invention et les procédés décrits dans les documents identifiés ci-dessus sont toujours dans le désordre.

Lesdits procédés de l'art antérieur ne prennent pas en compte individuellement les articles stockés et/ou gère l'occupation ou la vacance de modules de rangement prédéterminés, de volume figé.

Selon l'invention, on met en oeuvre le rangement dans le désordre en manipulant les objets en eux-mêmes et en gérant des volumes de rangement non figés (des espaces vides).

En effet, le procédé de l'invention se caractérise en ce que le rangement des objets s'effectue en fonction de leur encombrement et des volumes de rangement disponibles dans le magasin.

On range lesdits objets dans la "première" place libre où ils peuvent rentrer compte tenu de leur encombrement.

Selon le procédé de l'invention, après chaque rangement, on enregistre l'emplacement dans lequel l'objet a été rangé ainsi que l'emplacement et les dimensions des volumes de rangement encore disponibles (des vides restants).

On dispose ainsi à tout moment des informations nécessaires pour aller chercher un objet dans le magasin et/ou y ranger un autre objet.

L'emplacement d'un objet dans le magasin est donc variable, suite à ses sorties et entrées dans ledit magasin.

Il peut également varier, sans que l'objet sorte du magasin. Par exemple, pour le rangement d'un autre objet, on peut souhaiter déplacer un objet déjà rangé dans le magasin.

Selon un autre cas de figure, on peut admettre qu'en "heure de pointe", on range systématiquement les objets dans le "premier" emplacement où il est possible de les ranger : celui qui implique la manipulation la plus courte, le trajet le plus bref ... Eventuellement, en "heure creuse", on pourra souhaiter les redéplacer pour les disposer selon un autre algorithme de tri. Selon cette éventualité, l'emplacement de l'objet varie également sans que celui-ci sorte du magasin.

Il convient donc, selon l'invention, à chaque instant, de connaître l'emplacement des objets dans le magasin ainsi que l'emplacement et les dimensions des volumes de rangement encore disponibles.

Ainsi, le procédé de l'invention se caractérise en ce que :
- les objets en eux-mêmes sont stockés, prélevés et rangés ;
- lesdits objets sont rangés en fonction de leur encombrement dans les volumes de rangement encore disponibles du magasin,
   et en ce que, à tout instant,
- leur emplacement ainsi que l'emplacement et les dimensions des volumes de rangement encore disponibles sont enregistrés.

Selon une variante préférée dudit procédé, les objets sont rangés dans au moins un bat de stockage définissant le volume de rangement --non compartimenté-- et en ce que, au sein de chacun desdits bacs de stockage, les objets sont rangés dans les espaces vides laissés par les objets déjà rangés.

Le procédé selon l'invention peut avantageusement être mis en oeuvre dans une bibliothèque, une vidéothèque, une discothèque, un service d'archives...

Il peut également être mis en oeuvre dans un magasin de pièces détachées.

Il permet la gestion physique de produits : livres, cassettes, disques, documents, pièces mécaniques par exemple.

On précisera ici qu'au sens de l'invention, le terme magasin peut désigner un magasin dans son intégralité, une partie d'un magasin, voire même une sous-unité de stockage au sein d'un magasin.

Ainsi, le procédé de l'invention peut, par exemple, être mis en oeuvre pour la gestion complète d'une bibliothèque et/ou pour la gestion de sous-unités au sein de celle-ci.

La mise en oeuvre du procédé selon l'invention, compte tenu du nombre desdits produits dans un magasin, peut s'avérer rapidement fastidieuse s'il n'est pas fait appel à l'informatique.

Ainsi, selon une variante préférée, la gestion de magasins selon le procédé de l'invention est assistée par ordinateur.

A tout instant, un calculateur mémorise l'encombrement de chacun des objets du magasin, l'emplacement de ceux qui sont effectivement présents dans le magasin ainsi que l'emplacement et les dimensions des volumes de rangement disponibles dans ledit magasin.

Ledit ordinateur peut également piloter des automates qui assurent le prélèvement et le rangement des objets à l'intérieur du magasin.

Ainsi, les entrées et sorties des objets peuvent être entièrement automatisées.

Pour rentrer un objet dans le magasin, l'ordinateur, après l'avoir identifié et connaissant son encombrement et les données relatives au remplissage du magasin, localise les différents emplacements où il est possible de le ranger. Il s'agit du premier algorithme de tri.

Si différentes possibilités sont offertes, il en choisira une en fonction d'au moins un autre algorithme de tri. Par exemple, le rangement des objets peut s'effectuer par le trajet le plus court vers les premières places disponibles ou en tenant compte de leur fréquence de sortie.

Des automates sont alors en mesure de conduire et de positionner l'objet dans l'emplacement sélectionné.

Ces mêmes automates sont capables, à la demande, d'aller chercher tel ou tel objet dans le magasin.

Selon une variante du procédé de l'invention, les objets sont stockés dans le magasin à l'intérieur d'étuis. Ils peuvent avantageusement être manipulés -prélevés et rangés- avec lesdits étuis.

La forme desdits étuis peut être optimisée pour des manipulations par automates, par robots.

On peut avoir plusieurs objets, de préférence de même nature, par étui ou un objet par étui.

On précise ci-après, pour illustration, la mise en oeuvre du procédé selon l'invention dans une bibliothèque, où sont stockés, prélevés et rangés des volumes.

Lesdits volumes sont avantageusement stockés, à l'unité, dans des étuis. Lesdits étuis sont rangés dans des bacs de stockage, la bibliothèque étant constituée d'un ensemble de tels bacs de stockage.

L'emplacement de chaque volume est connu, dès lors que l'on connaît le bac de stockage dans lequel il est stocké et sa position dans ledit bac de stockage. Cette position peut être définie par différents types de repères. Indépendamment de tout repère, elle peut être définie par le numéro d'ordre du volume dans le bac de stockage. Ce numéro d'ordre peut être déterminé à partir du fond ou de la partie avant du bac.

Comme indiqué ci-dessus, ce numéro d'ordre peut varier sans que le volume sorte du magasin. Ainsi, dans un bac de stockage, un volume en troisième position vient en deuxième position si on prelève le volume en deuxième position...

Dans une telle bibliothèque "en désordre", à chaque instant, on doit connaître :
- la taille des volumes,
- le remplissage des différents bacs,
- l'emplacement des volumes dans le magasin.

Avantageusement, on caractérise les volumes par leur seule épaisseur. On les manipule tous dans le même type d'étuis dont seule l'épaisseur est variable.

Une bibliothèque peut ainsi être gérée dans son intégralité par la mise en oeuvre du procédé de l'invention, "à grande échelle".

Avantageusement, les manipulations en son sein sont entièrement automatisées et commandées par ordinateur.

Selon d'autres variantes, le procédé de l'invention peut intervenir dans la gestion d'une bibliothèque, "à plus petite échelle". Il peut être mis en oeuvre au niveau de parties de la bibliothèque, voire même au niveau de sous-unités de stockage de ladite bibliothèque... Ceci est illustré ci-après.

La bibliothèque peut, par exemple, avoir été divisée en deux parties : une partie où sont stockés les volumes dits "actifs", dont la fréquence de sortie est supérieure à un certain seuil ; une partie où sont stockés les volumes dits "dormants", dont la fréquence de sortie est inférieure audit seuil. Dans un tel contexte, on peut mettre en oeuvre le procédé de l'invention au niveau de chacune des deux parties de la bibliothèque ou seulement au niveau de la partie contenant les volumes dits "actifs", partie où le plus grand nombre de manipulations s'effectuent.

Dans une telle bibliothèque, le rangement des volumes est réalisé en deux étapes :
- on détermine préalablement la nature des volumes à ranger : "actifs'' ou "dormants" ;
- s' il s'agit d'un volume "actif", il est rangé par la mise en oeuvre du procédé selon l'invention, dans la partie "active" de la bibliothèque ;
- s'il s'agit d'un volume "dormant", il est rangé dans la partie "dormante" de la bibliothèque, avec éventuellement mise en oeuvre du procédé de l'invention.

Le procédé de l'invention peut donc, selon cette variante, être mis en oeuvre dans les deux parties de la bibliothèque (après un pré-classement du volume à ranger : "actif" ou "dormant"...). Il peut y être mis en oeuvre de manière différente. En effet, on conçoit que l'automatisation complète des manipulations dans la partie de la bibliothèque où sont stockés les "dormants" constitue un luxe non justifié. Avantageusement, on pourra donc concevoir une bibliothèque en deux parties :
- partie des "actifs" où le procédé de l'invention est mis en oeuvre de façon automatique,
- partie des "dormants" où le procédé de l'invention est mis en oeuvre de façon semi-automatique, avec intervention d'un opérateur, voire de façon totalement manuelle. On peut même dans cette partie de la bibliothèque ne pas mettre en oeuvre le procédé de l'invention et ranger les volumes de façon classique.

Selon cette variante de l'invention, pour le prélèvement d'un "dormant", ledit opérateur le manipule directement.

On pourraît concevoir, dans le cadre de cette bibliothèque en deux parties, un autre processus de prélèvement et de rangement des "dormants", processus selon lequel les "dormants" à prélever ne seraient manipulés à l'unité que dans la partie des "actifs".Selon cette autre variante de l'invention, le "dormant" que l'on souhaite consulter est transporté de la partie des "dormants" vers la partie des "actifs", dans sa sous-unité de stockage (tiroir par exemple). Cette sous-unité est stockée dans une sous-partie de la partie des "actifs". Le "dormant" y est prélevé et y sera re-rangé, avant son retour dans la partie des "dormants". Selon cette variante, le procédé de l'invention peut être mis en oeuvre pour le rangement des actifs dans la partie active de la bibliothèque ; pour le rangement du "dormant" dans la sous-unité de stockage transférée temporairement dans la partie "active" et pour le rangement de ladite sous-unité de stockage dans la partie "dormante".

Ceci illustre le fait que le procédé de l'invention peut intervenir à différents niveaux et "à plus ou moins grande échelle" dans la gestion d'une bibliothèque ou de tout autre magasin.

La présente invention a également pour objet un dispositif pour la mise en oeuvre du procédé explicité ci-dessus.

Ce dispositif comprend avantageusement :
- un magasin compartimenté, chaque compartiment pouvant recevoir un bac de stockage ; ledit bac de stockage définissant un volume de rangement non compartimenté des objets,
- au moins un robot de préhension desdits objets, monté sur un transtockeur, mobile à l'intérieur du magasin,
- des moyens de transfert desdits objets du magasin vers l'utilisateur et vice versa,
- et des moyens informatiques capables de stocker les données relatives au remplissage du magasin, à l'encombrement des objets et à leur emplacement dans ledit magasin et de piloter ledit robot et lesdits moyens de transfert pour assurer le prélèvement et le rangement desdits objets.

Ce dispositif permet la gestion informatique d'un magasin au sein duquel les manipulations d'objets sont entièrement automatisées.

A partir de la demande d'un utilisateur, le produit est sorti du stockage et mis à disposition automatiquement.

Le système fonctionne évidemment dans le sens de la remise du document dans le magasin lorsque l'utilisateur le rend.

Le robot est capable d'aller chercher un objet dans le magasin et de le solidariser aux moyens de transfert pour son acheminement vers l'utilisateur. En sens inverse, il est capable de désolidariser un objet desdits moyens de transfert et de le mettre en place dans le magasin.

Lesdits moyens de transfert peuvent consister en un convoyeur à rouleaux, à chaînes, à tapis... Ils sont évidemment adaptés au poids et à la forme des objets à transférer.

L'ordinateur, à chaque instant, sait trouver un objet dans le magasin (ou indiquer qu'il en a été sorti) et trouver une place dans celui-ci à un objet à y ranger.

Le magasin est par exemple un magasin en hauteur comportant des cases, chacune desdites cases pouvant recevoir un bac de stockage des objets à stocker.

Si l'on a un objet ou un type d'objet par bac, il suffira de repérer ledit objet par le numéro ou la position de son bac ou de sa case.

On peut avoir plusieurs objets de type différent dans un même bac sans que celui-ci soit compartimenté. Lesdits objets sont repérés par leur numéro d'ordre dans ledit bac.

Selon une variante de l'invention, les bacs de stockage du magasin peuvent présenter une partie arrière mobile. On peut ainsi régler leur profondeur et/ou déplacer vers l'avant les objets qu'ils contiennent en comblant des vides. On modifie alors la position des objets dans les bacs. Ceux-ci peuvent toutefois toujours être repérés par leur numéro d'ordre dans lesdits bacs.

Dans le magasin, les objets sont avantageusement stockés dans des étuis.

Ils peuvent être stockés à l'unité ou regroupés à plusieurs du même type dans un étui.

Le robot les manipule avantageusement avec ledit étui.

Les bacs de stockage, constituant le magasin, peuvent être de forme parallèlépipédique et ne posséder ni fond, ni côtés latéraux, mais deux barres dans leur partie supérieure. A ses barres, sont suspendus les objets à stocker. Ils peuvent y être suspendus directement si leur forme le permet ou s'ils sont munis de moyens adéquats. Ils y sont plus généralement suspendus par l'intermédiaire de leur étui.

Lesdits étuis comportent avantageusement une partie rigide, au moins dans leur partie supérieure à laquelle est fixée une pochette souple.

La souplesse de la pochette lui permet de recevoir des objets de différents gabarits. Sa partie rigide facilite sa préhension par le robot et augmente sa stabilité dans les bacs de stockage.

Selon une variante de l'invention, les étuis ne préexistent pas. Ils sont générés juste avant le rangement de l'objet dans le magasin.

A cette fin, ledit objet est passé dans un four où il est surmoulé par film plastique. Il est surmoulé de préférence avec un élément formant poignée. Il peut également, après surmoulage, être solidarisé à une poignée.

On réalise ainsi pour l'objet à ranger selon le procédé de l'invention, un emballage type blister.

Ledit objet se trouve ainsi dans un confinement étanche aux poussières et résistant aux agressivités de l'environnement : humidité, acidité, U.V...

L'invention est maintenant décrite en référence aux trois figures annexées sur lesquelles :
- Fig. 1 représente le schéma synoptique d'un dispositif selon l'invention ;
- Fig. 2 représente un bac de stockage, du type de ceux pouvant intervenir dans un dispositif selon l'invention ;
- Fig. 3a à 3c représentent différents types de systèmes unitaires de stockage qui peuvent être placés dans les bacs de stockage, selon la figure 2.

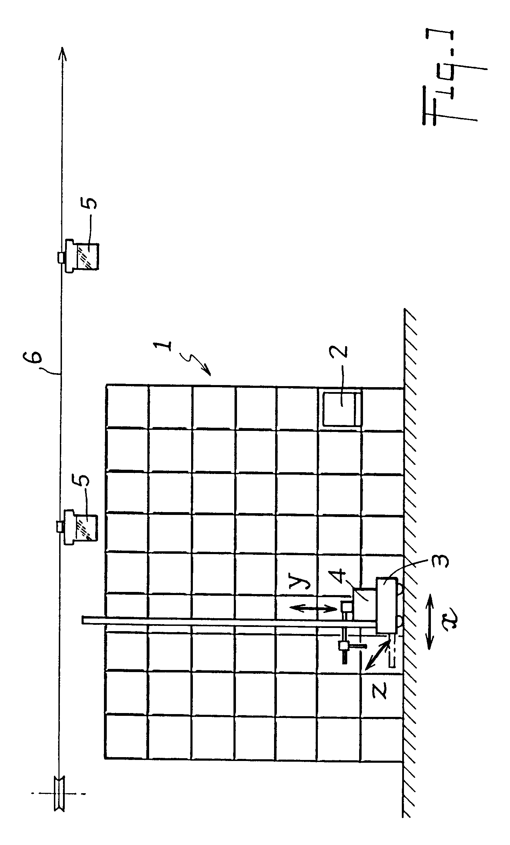

Sur la figure 1, on a représenté en (1) un magasin en hauteur.

Celui-ci est constitué d'un certain nombre de cases, chacune pouvant recevoir un bac de stockage (2) qui reçoit les produits à stocker.

L'accès à ces cases se fait à l'aide d'un transtockeur (3) qui permet à un robot embarqué (4) d'effectuer les déplacements en X et Y, c'est-à-dire de venir rechercher le bac de stockage Xi Yi qui a été préalablement sélectionné. Le robot (4) sort ledit bac (2) et y prend l'objet (5) qui a été réclamé. Ledit objet (5) est alors solidarisé au convoyeur (6) qui l'achemine vers l'utilisateur. Des systèmes d'aiguillages peuvent être prévus sur le chemin dudit objet (5).

De la même façon, le convoyeur (6) et le robot (4) sur le transtockeur (3) interviendront pour placer un objet (5) dans le magasin (1), à un "quelconque" emplacement disponible.

On rappelera ici, que le magasin est constamment en "désordre".

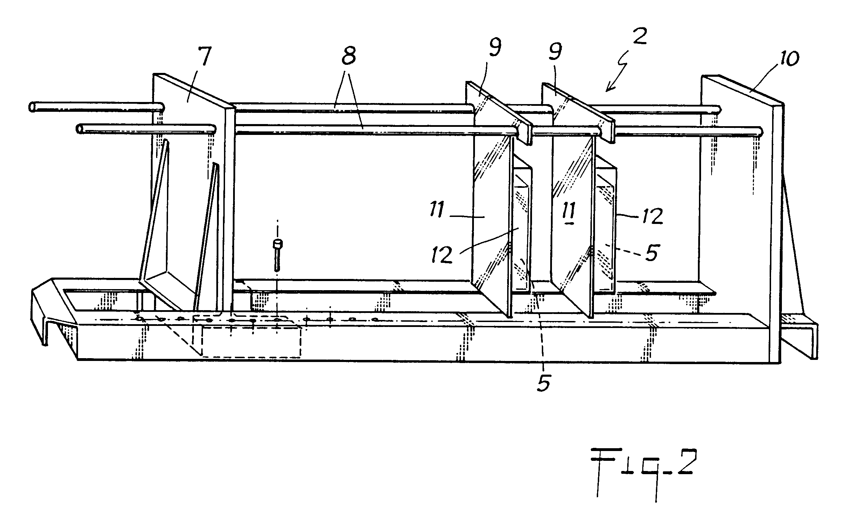

Le bac de stockage (2) représenté sur la figure 2 a sa partie arrière (7) mobile. Ceci permet de régler facilement sa profondeur.

Ledit bac est un casier en forme de parallèlépipède qui ne possède ni fond ni côtés latéraux.

Il possède deux barres (8) dans sa partie supérieure. Ces barres (8) reçoivent les systèmes unitaires de stockage ou étuis (9) des produits (5).

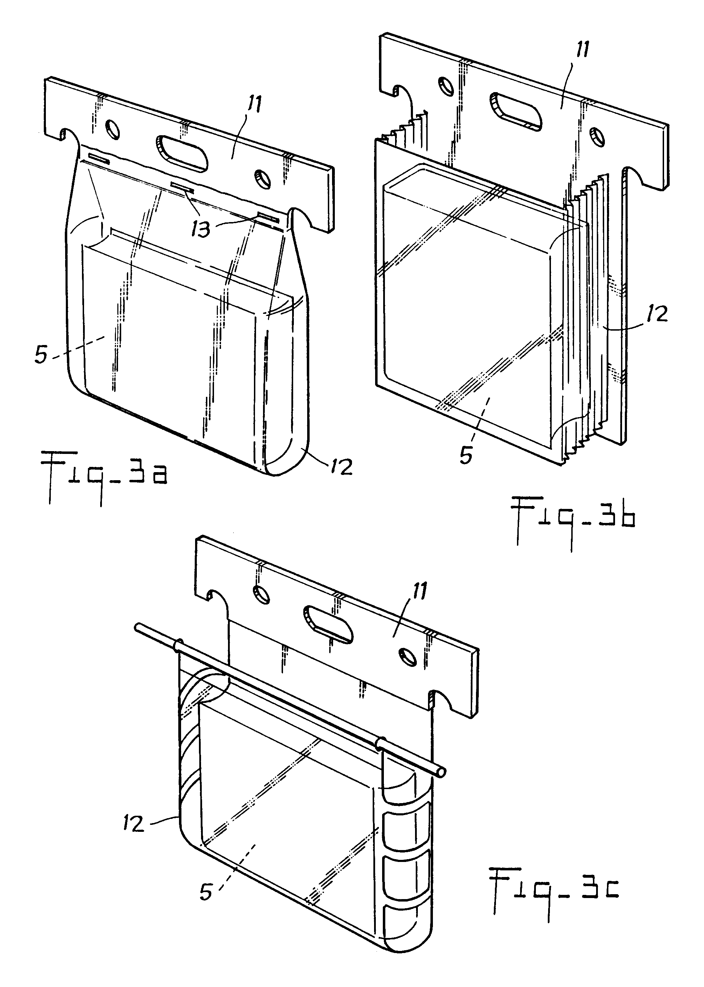

On montre en détail sur les figures 3 différents types de systèmes unitaires de stockage (9). De tels systèmes sont particulièrement avantageux pour stocker des volumes, des documents...

On constate que dans un tel bac de stockage, la position des systèmes unitaires de stockage -donc celle des produits stockés, n'est pas indexée. Lesdits systèmes unitaires de stockage ou étuis (9) des produits (5) sont repérés par leur numéro d'ordre dans le bac (2): le premier, le second... à partir du fond ou de la partir avant (10) du bac, qui est fixe.

Lesdits systèmes unitaires de stockage (9) comportent une partie rigide (11) et une partie plus souple (12).

La partie rigide peut être plus ou moins importante.

Elle se trouve au moins dans la partie supérieure des étuis (9) et est pincée par le robot (4) lorsqu'il manipule l'objet (5) dans son étui (9).

La partie souple des étuis peut être en tissu, en matière plastique, en papier...

Le support rigide peut être en bois, en matière plastique... Il constitue un intercalaire entre les différents objets dans les bacs de stockage du magasin.

Sur la figure 3b, on a montré un étui particulièrement adapté au stockage d'objets de différentes largeurs. Sa partie souple (12) constitue un soufflet. Sa partie rigide (11) constitue un parfait intercalaire.

La partie souple (12) de l'étui (9) selon la figure 3c peut être solidarisée à sa partie rigide (11) par un quelconque système d'accrochage pour constituer un étui "fermé".

L'étui (9) selon la figure 3a est fermé par des clips (13).

Lesdits étuis (9) sont particulièrement adaptés pour la mise en oeuvre du procédé selon l'invention dans une bibliothèque.

Leur support rigide, du même type, est facilement manipulable par le même système automatique. Ils peuvent donc coexister dans un même magasin, dans une même bibliothèque.

Selon l'invention, on peut donc gérer une bibliothèque où les volumes ne sont rangés ni par auteur, ni par thème..., où lesdits volumes n'ont aucune place attitrée. On se dispense également de l'intervention de "fantômes" lorsque lesdits volumes sont sortis.

On remarquera que, selon l'invention, les manipulations à accomplir par le robot sont extrêmement simples. Il ne manipule ni intercalaires ni "fantômes".

## Revendications

1. Procédé de gestion de magasins, au sein desquels le rangement d'objets ne s'effectue pas suivant un classement indexé, caractérisé en ce que :
- les objets en eux-mêmes sont stockés, prélevés et rangés;
- lesdits objets sont rangés en fonction de leur encombrement dans les volumes de rangement encore disponibles du magasin, et en ce que, à tout instant,
- leur emplacement ainsi que l'emplacement et les dimensions des volumes de rangement encore disponibles sont enregistrés.

2. Procédé selon la revendication 1, caractérisé en ce que les objets sont rangés dans au moins un bac de stockage définissant le volume de rangement --non compartimenté-- et en ce que, au sein de chacun desdits bacs de stockage, les objets sont rangés dans les espaces vides laissés par les objets déjà rangés.

3. Procédé selon l'une des revendications 1 ou 2, caractérisé en ce qu'il est mis en oeuvre dans une bibliothèque, une vidéothèque, une discothèque, un service d'archives...

4. Procédé selon l'une quelconque des revendications 1 à 3, caractérisé en ce que ladite gestion est assistée par ordinateur.

5. Procédé selon l'une quelconque des revendications 1 à 4, caractérisé en ce que le prélèvement et le rangement desdits objets sont entièrement automatisés.

6. Procédé selon l'une quelconque des revendications 1 à 5, caractérisé en ce que, après sélection des différents emplacements possibles, le rangement desdits objets s'effectue par le trajet le plus court ou en tenant compte de leur fréquence de sortie.

7. Procédé selon l'une quelconque des revendications 1 à 6, caractérisé en ce que lesdits objets sont stockés dans des étuis et en ce qu'ils sont manipulés --prélevés-- avec lesdits étuis.

8. Procédé de gestion d'une bibliothèque dans laquelle sont stockés, prélevés et rangés des volumes, selon l'une quelconque des revendications précédentes, caractérisé en ce que chaque volume dans un étui est rangé dans un bac de stockage, l'emplacement dudit volume étant défini par l'identification dudit bac de stockage et par le numéro d'ordre dudit volume dans ledit bac de stockage.

9. Dispositif pour la mise en oeuvre du procédé selon l'une quelconque des revendications 1 à 8, caractérisé en ce qu'il comprend :
- un magasin compartimenté (1), chaque compartiment pouvant recevoir un bac de stockage (2); ledit bac de stockage définissant un volume de rangement non compartimenté desdits objets,
- au moins un robot (4) de préhension desdits objets, monté sur un transtockeur (3), mobile à l'intérieur du magasin (1),
- des moyens de transfert (6) desdits objets du magasin (1) vers l'utilisateur et vice versa,
- et des moyens informatiques capables de stocker les données relatives au remplissage du magasin (1), à l'encombrement des objets et à leur emplacement dans ledit magasin et de piloter ledit robot (4) et lesdits moyens de transfert (6) pour assurer le prélèvement et le rangement desdits objets.

10. Dispositif selon la revendication 9, caractérisé en ce que lesdits bacs de stockage (2) possèdent une partie arrière mobile.

11. Dispositif selon l'une des revendications 9 ou 10, caractérisé en ce que, dans le magasin (1), lesdits objets sont stockés dans des étuis (9).

12. Dispositif selon la revendication 11, caractérisé en ce que lesdits étuis (9) comportent une partie rigide (11) au moins dans leur partie supérieure, à laquelle est fixée une pochette souple (12).

13. Dispositif selon l'une des revendications 11 ou 12, caractérisé en ce que lesdits étuis sont du type blisters.

14. Dispositif selon l'une quelconque des revendications 9, 11 à 13, caractérisé en ce que lesdits bacs de stockage (2), de forme parallèlépipédique ne possèdent ni fond, ni côtés latéraux mais deux barres (8) dans leur partie supérieure auxquelles sont suspendus directement lesdits objets ou les étuis (9) contenant lesdits objets.

## Claims

1. Process for managing stores, in which objects are not stored in accordance with an indexed classification, characterized in that:
- the objects per se are stored, removed and arranged;
- said objects are stored as a function of their dimensions in the storage volumes still available in the store, and in that, at any instant,
- their location as well as the location and dimensions of the storage volumes still available are recorded.

2. Process according to claim 1, characterized in that the objects are stored in at least one storage unit defining the storage volume --non-compartmented-- and in that, within each of said storage units, the objects are stored within the unfilled spaces left by the already stored objects.

3. Process according to one of claims 1 or 2, characterized in that it is carried out in a library, videotheque, discotheque, archives, etc...

4. Process according to any one of claims 1 to 3, characterized in that said management is computer-assisted.

5. Process according to any one of claims 1 to 4, characterized in that removal and storing of said objects are entirely automatic.

6. Process according to any one of claims 1 to 5, characterized in that, after selecting the various possible locations, the storage of said objects is effected by the shortest path or by taking into account their frequency of exit.

7. Process according to any one of claims 1 to 6, characterized in that said objects are stored in cases and in that they are manipulated --removed-- with said cases.

8. Process for managing a library, in which books are stored, removed and arranged, according to any one of the preceding claims, characterized in that each book is placed in a case and then stored in a storage unit, the location of said book being defined by the identification of said storage unit and by the sequence number of said book in said storage unit.

9. Device for carrying out the process according to any one of claims 1 to 8, characterized in that it comprises:
- a compartmented store (1), each compartment being adapted to receive a storage unit (2); said storage unit defining a non-compartmented storage volume for said objects,
- at least one robot (4) for gripping said objects, mounted on a transtocker (3), mobile within the store (1),
- conveyor means (6) for transferring said objects from the store (1) towards the user, and vice versa,
- and data-processing means capable of storing the data relative to the filling of the store (1), to the dimensions of the objects and to their location in said store and of controlling said robot (4) and said conveyor means (6) to ensure removal and storage of said objects.

10. Device according to claim 9, characterized in that said storage units (2) comprise a mobile rear part.

11. Device according to one of claims 9 or 10, characterized in that, in the store (1), said objects are stored in cases (9).

12. Device according to claim 11, characterized in that said cases (9) comprise a rigid part (11) at least in their upper part, to which a supple bag (12) is fixed.

13. Device according to one of claims 11 or 12, characterized in that said cases are of the blister type.

14. Device according to any one of claims 9, 11 to 13, characterized in that said storage units (2), of parallelepipedic shape, present neither a back nor sides, but two bars (8) in their upper part, from which said objects or cases (9) containing said objects are directly suspended.

## Patentansprüche

1. Verfahren zur Verwaltung von Magazinen, in denen die Ablage von Gegenständen nicht nach einer Indexeinteilung erfolgt, dadurch gekennzeichnet, daß:
- die Gegenstände als solche gelagert, entnommen und abgelegt werden;
- die Gegenstände in Abhängigkeit ihres Platzbedarfs in den noch verfügbaren Ablageräumen des Magazins abgelegt werden, und daß permanent
- ihr Platz sowie die Plätze und Ausmaße der noch verfügbaren Ablageräume registriert werden.

2. Verfahren nach Anspruch 1, dadurch gekennzeichnet, daß die Gegenstände in mindestens einem Lagerbehälter abgelegt werden, der den - nicht unterteilten - Ablageraum definiert, und daß die Gegenstände innerhalb jedes Lagerbehälters in den von den bereits abgelegten Gegenständen freigelassenen Räumen abgelegt werden.

3. Verfahren nach einem der Ansprüche 1 oder 2, dadurch gekennzeichnet, daß es in einer Bibliothek, einer Videothek, einer Diskothek, einem Archiv, ... Anwendung findet.

4. Verfahren nach einem der Ansprüche 1 bis 3, dadurch gekennzeichnet, daß die Verwaltung computergestützt ist.

5. Verfahren nach einem der Ansprüche 1 bis 4, dadurch gekennzeichnet, daß die Entnahme und die Ablage der Gegenstände vollkommen automatisiert sind.

6. Verfahren nach einem der Ansprüche 1 bis 5, dadurch gekennzeichnet, daß nach der Auswahl der verschiedenen möglichen Plätze die Ablage der Gegenstände über den kürzesten Weg oder unter Berücksichtigung ihrer Ausgabefrequenz erfolgt.

7. Verfahren nach einem der Ansprüche 1 bis 6, dadurch gekennzeichnet, daß die Gegenstände in Hüllen aufbewahrt werden und daß sie mit den Hüllen manipuliert - entnommen - werden.

8. Verfahren zur Verwaltung einer Bibliothek zur Lagerung, Entnahme und Ablage von Banden, nach einem der vorhergehenden Ansprüche, dadurch gekennzeichnet, daß jeder Band in einer Hülle in einen Lagerbehälter abgelegt wird, wobei der Platz des Bandes durch die Identifikation des Lagerbehälters und durch die Ordnungszahl des Bandes im Lagerbehälter definiert wird.

9. Vorrichtung zur Durchführung des Verfahrens nach einem der Ansprüche 1 bis 8, dadurch gekennzeichnet daß sie umfaßt:
- ein in Abteile unterteiltes Magazin (1), wobei jedes Abteil einen Lagerbehälter (2) aufnehmen kann, welcher Lagerbehälter einen Ablageraum ohne Abteile für die Gegenstände definiert,
- mindestens einen Roboter (4) zum Ergreifen der Gegenstände, welcher auf einem innerhalb des Magazins (1) beweglichen Regalbediengerät (3) montiert ist,
- Einrichtungen (6) zum Transferieren der Gegenstände vom Magazin (1) zum Benützer und umgekehrt,
- und Informatikeinrichtungen zur Speicherung der Daten bezüglich des Füllstandes des Magazins (1), des Platzbedarfs der Gegenstände und ihres Platzes im Magazin und zur Steuerung des Roboters (4) und der Transfereinrichtungen (6) zwecks Gewährleistung der Entnahme und Ablage der Gegenstände.

10. Vorrichtung nach Anspruch 9, dadurch gekennzeichnet, daß die Lagerbehälter (2) einen beweglichen hinteren Teil besitzen.

11. Vorrichtung nach einem der Ansprüch 9 oder 10, dadurch gekennzeichnet, daß die Gegenstände im Magazin (1) in Hüllen (9) gelagert sind.

12. Vorrichtung nach Anspruch 11, dadurch gekennzeichnet, daß die Hüllen (9) einen starren Teil (11) zumindest in ihrem oberen Teil aufweisen, an dem eine nachgiebige Tasche (12) befestigt ist.

13. Vorrichtung nach einem der Ansprüche 11 oder 12, dadurch gekennzeichnet, daß die Hüllen vom Blistertyp sind.

14. Vorrichtung nach einem der Ansprüche 9, 11 bis 13, dadurch gekennzeichnet, daß die Lagerbehälter (2) von parallelepipedischer Form weder einen Boden noch Seitenwände, aber zwei Stäbe (8) in ihrem oberen Teil aufweisen, an denen die Gegenstände direkt bzw. die die Gegenstände enthaltenden Hüllen (9) hängen.
